(19) Europäisches Patentamt
European Patent Office
Office européen des brevets

(11) **EP 3 751 887 A1**

(12) **EUROPEAN PATENT APPLICATION**

(43) Date of publication:
**16.12.2020 Bulletin 2020/51**

(51) Int Cl.:
**H04W 24/04** (2009.01)

(21) Application number: **20175407.4**

(22) Date of filing: **19.05.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.06.2019 CN 201910499846**

(71) Applicant: **FUJITSU LIMITED**
**Kanagawa 211-8588 (JP)**

(72) Inventors:
• **Yi, Su**
  **Beijing, 100027 (CN)**
• **Wang, Hao**
  **Beijing, 100027 (CN)**
• **Xue, Wenqian**
  **Beijing, 100027 (CN)**
• **Wang, Lefei**
  **Beijing, 100027 (CN)**

(74) Representative: **Hoffmann Eitle**
**Patent- und Rechtsanwälte PartmbB**
**Arabellastraße 30**
**81925 München (DE)**

(54) **STATE MONITORING APPARATUS AND METHOD FOR WIRELESS NETWORK**

(57) Embodiments of this disclosure disclose a state monitoring apparatus and method for a wireless network. The method includes: collecting measurement parameters of a link to be monitored in the wireless network; calculating the collected measurement parameters to obtain statistical metrics of each measurement parameter; according to a predetermined change relationship between statistical metrics and possibilities of states, determining a possibility of each state reflected by each statistical metric; and performing fusion processing on the possibilities of states reflected by a plurality of statistical metrics of the link to be monitored, and determining a state of the link to be monitored. The network state may be efficiently monitored, and accuracy of the monitoring result may be improved.

Fig. 4

**Description**

CROSS-REFERENCE TO RELATED APPLICATIONS

This application is based on and hereby claims priority to Chinese Application No. 201910499846.7, filed June 11, 2019, in the State Intellectual Property Office of China, the disclosure of which is incorporated herein by reference.

Technical Field

This disclosure relates to the field of communication technologies.

Background

The Internet of Things has become a powerful force for business change, and its disruptive impact will be felt across all industries and all areas of society. Entities in the Internet of Things usually include sensor devices, gateways, networks, clouds, and applications, etc. With the continuous growth of technologies and increasing dependence on other short-range wireless networks such as a wireless local area network (WIFI), a wireless personal area network (Zigbee), and Bluetooth, users are beginning to demand to obtain ubiquitous coverage with reliability, performance and scalability from wireless networks. However, the existing sensor network deployment provides inadequate coverage and unpredictable performance, and one important reason leading to the degraded performance is interference. Unlike wired networks, wireless links are easily affected by environmental changes or surrounding wireless activities.
It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

According to an aspect of the embodiments of this disclosure, there is provided a state monitoring apparatus for a wireless network. The apparatus includes a memory and a processor coupled to the memory. The processor is configured to collect measurement parameters of a link to be monitored in the wireless network; calculate the collected measurement parameters to obtain statistical metrics of each measurement parameter; determine, according to a predetermined change relationship between statistical metrics and possibilities of states, a possibility of each state reflected by each statistical metric; and perform fusion processing on the possibilities of states reflected by a plurality of statistical metrics of the link to be monitored, and determine a state of the link to be monitored.
According to another aspect of the embodiments of this disclosure, there is provided a state monitoring method for a wireless network. The method includes collecting measurement parameters of a link to be monitored in the wireless network; calculating the collected measurement parameters to obtain statistical metrics of each measurement parameter; according to a predetermined change relationship between statistical metrics and possibilities of states, determining a possibility of each state reflected by each statistical metric; and performing fusion processing on the possibilities of states reflected by a plurality of statistical metrics of the link to be monitored, and determining a state of the link to be monitored.
With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.
Features that are described and/or illustrated with respect to one embodiment may be used in the same way or in a similar way in one or more other embodiments and/or in combination with or instead of the features of the other embodiments.
It should be emphasized that the term "comprise/include" when used in this specification is taken to specify the presence of stated features, integers, steps or components but does not preclude the presence or addition of one or more other features, integers, steps, components or groups thereof.

Brief Description of the Drawings

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG 1 is a flowchart of the state monitoring method for a wireless network according to an embodiment of this disclosure;

FIG. 2 is a schematic diagram of a change relationship between an RTT average value and possibilities of states according to an embodiment of this disclosure;

FIG. 3 is schematic diagram of a change relationship between a PLR and possibilities of states according to an embodiment of this disclosure;

FIG. 4 is schematic diagram of a change relationship between RSSI standard deviation and possibilities of states according to an embodiment of this disclosure;

FIG. 5 is a flowchart of the state monitoring method for a wireless network according to an embodiment of this disclosure;

FIG. 6 is a schematic diagram of the state monitoring apparatus for a wireless network according to an embodiment of this disclosure;

FIG. 7 is a schematic diagram of the state monitoring apparatus for a wireless network according to an embodiment of this disclosure;

FIG. 8 is a schematic diagram of a structure of an implementation of the terminal device, network node or station according to an embodiment of this disclosure;

FIG. 9 is a schematic diagram of the network system according to an embodiment of this disclosure; and

FIG. 10 is a schematic diagram of the network system in according to an embodiment of this disclosure.

Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

The embodiments of this disclosure may be applicable to various wireless networks, such as the Internet of Things, sensor networks, wireless local area networks (WLAN), and other wireless networks. In the embodiments of this disclosure, for the convenience of explanation, terms in a scenario of the Internet of Things are used, and some contexts related to specifications are based on the IEEE802.15.4 standard. This idea may be easily extended to other wireless communication systems and other wireless standards.

The embodiments of this disclosure shall be described below with reference to the drawings and implementations.

It was found by the inventor that technologies or systems of the Institute of Electrical and Electronics Engineers (IEEE) 802.11, 802.15.4, 802.15.1, etc., are all in unlicensed bands. Since multiple systems may interfere with each other, and the number of users in the unlicensed bands are rapidly increasing, the interference issue will become more critical. In addition, interference is unpredictable, because it is often generated by mobile users, other unlicensed band modules, and varying traffics. It can be seen that real-time state monitoring and automatic trouble diagnosis are particularly important for efficient operation and management services.

Embodiments of this disclosure provide a state monitoring apparatus and method for a wireless network, in which a possibility of each state reflected by each statistical metric is determined according to a predetermined change relationship between statistical metrics and possibilities of states, fusion processing is performed on the possibilities of states reflected by a plurality of statistical metrics of the link to be monitored, and a state of the link to be monitored is determined. The network state may be efficiently monitored, and accuracy of the monitoring result may be improved.

An advantage of the embodiments of this disclosure exists in that possibilities of states reflected by the statistical metrics are determined according to a predetermined change relationship between statistical metrics and possibilities of states, fusion processing is performed on the possibilities of states reflected by a plurality of statistical metrics of the link to be monitored, and a state of the link to be monitored is determined. The network state may be efficiently monitored, and accuracy of the monitoring result may be improved.

Embodiment 1

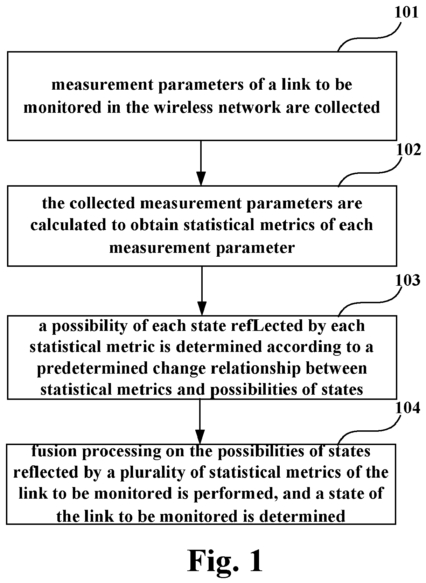

Embodiment 1 of this disclosure provides a state monitoring method for a wireless network. FIG. 1 is a flowchart of the state monitoring method for a wireless network in Embodiment 1 of this disclosure. As shown in FIG. 1, the method includes:

operation 101: measurement parameters of a link to be monitored in the wireless network are collected;
operation 102: the collected measurement parameters are calculated to obtain statistical metrics of each measurement parameter;

operation 103: a possibility of each state reflected by each statistical metric is determined according to a predetermined change relationship between statistical metrics and possibilities of states; and

operation 104: fusion processing on the possibilities of states reflected by a plurality of statistical metrics of the link to be monitored is performed, and a state of the link to be monitored is determined.

It can be seen from the above embodiment that the possibilities of the states of the link to be monitored are obtained by performing fusion processing on the possibilities of the states of multiple parameters, so as to determine the state of the link to be monitored, which may efficiently monitor the states of network, and improve accuracy of the monitoring result.

In the embodiment of this disclosure, the wireless network may be various types of wireless networks, such as the Internet of Things, a sensor network, a wireless local area network (WLAN), and other wireless networks. And furthermore, a structure of the wireless network is not limited in the embodiment of this disclosure.

In the embodiment of this disclosure, the link to be monitored in the wireless network may be any link in the wireless network that needs to be monitored, such as a communication link between two stations, or a communication link between an access point and a station, which is not limited in the embodiment of this disclosure.

In operation 101, measurement parameters reported by a device to the link to be monitored corresponds may be collected by the periodic PING or similar WPAN-PING method. For example, the measurement parameters may be collected according to a preset period, which may be referred to as "a diagnostic period." For example, after the network is started or an instruction is received, the measurement parameters are collected according to the preset period, and the period may be set on demand.

In the embodiment of this disclosure, the measurement parameters may include at least two of the following parameters: a roundtrip delay time (RTT) between data transmission and an acknowledgement frame reception, a packet loss number, and a received signal strength indicator (RSSI) of all received data frames and acknowledgement frames. However, this embodiment of this disclosure is not limited thereto, and the measurement parameters may also be other types of parameters. And reference may be made to existing techniques for obtaining the measurement parameters, which shall not be described herein any further.

In operation 102, the collected measurement parameters are calculated to obtain statistical metrics of each measurement parameter. The calculating method includes but not limited to calculating an average value, a variance value, a standard deviation, and a gradient. In the embodiment of this disclosure, the statistical metrics may include parameters characterizing the states of layers of the network, hence, an overall state of the network may be reflected from different angles, so that the monitoring result is more accurate.

For example, when the measurement parameter is an RTT, the statistical metric is an RTT average value or RTT standard deviation/variance, etc., when the measurement parameter is the number of dropped packets, the statistical metric may be the packet loss rate, etc., and when the measurement parameter is an RSSI, the statistical metric may be RSSI a standard deviation/variance or an RSSI gradient, etc. The above are examples only, and this embodiment of this disclosure is not limited thereto.

In operation 103, the possibility of each states reflected by each statistical metric is determined according to the predetermined change relationship between statistical metrics and the possibilities of states; wherein the states may include various types of possible states of the link to be monitored, such as a normal state, a fading state and an interference state. The possibilities indicate probabilities of occurrences of corresponding states.

For example, the normal state indicates that there is no environmental change during this period of time and the channel conditions are very stable. In this state, there is almost no packet loss, the RSSI changes between different packets are very small, and the RTT is within a certain threshold range. For example, the fading state indicates that the environment has changed, such as changes in the environment caused by objects movement in a transmission area, or pedestrians walking around, or transceiver shaking or movement. When fading occurs, the RSSI value may fluctuate rapidly, and a situation such as packet loss occurs sometimes. For example, due to wide use of ISM (industrial, scientific and medical) bandwidth, bandwidth congestion is caused, and adjacent 802.15.4 networks, WiFi networks, Bluetooth, microwave ovens, etc., may cause interference. In the interference state, a situation, such as packet loss and an increase in an RTT, may occur. Hence, the statistical metrics may reflect the possibilities of various states, which shall be described below in detail.

In the embodiment of this disclosure, before operation 103, the method may further include (not shown): the change relationship between statistical metrics and possibilities of states is determined, the change relationship including one of the following relationships, or a combination of at least two thereof: a first relationship in which a possibility of a state is unchanged as a statistical metric is changed, a second relationship in which a possibility of a state is increased as a statistical metric is increased, and a third relationship in which a possibility of a state is decreased as a statistical metric is increased.

Following description shall be given with reference to particular measurement parameters and statistical metrics.

For example, when the measurement parameter is an RTT, the statistical metric is the average RTT, and the states include: a normal state, a fading state and an interference state, that is, for an RTT average value, a probability of the normal state plus a probability of the fading state plus a probability of the interference state is 1, wherein,

a change relationship between the RTT average value and a possibility of the normal state is a combination of the first relationship and the third relationship, in which when the RTT average value is less than a first threshold, as the RTT average value is increased, a possibility of the normal state is 1 and kept unchanged, and when the RTT average value is greater than or equal to the first threshold, as the RTT average value is increased, the possibility of the normal state is decreased and tends to 0;

a change relationship between the RTT average value and a possibility of the interference state is a combination of the first relationship and the second relationship, in which when the RTT average value is less than a first threshold, as the RTT average value is increased, a possibility of the interference state is 0 and kept unchanged, and when the RTT average value is greater than or equal to the first threshold, as the RTT average value is increased, the possibility of the interference state is increased and tends to 1;

and a change relationship between the RTT average value and a possibility of the fading state is a combination of the first relationship, the second relationship and the third relationship, in which when the RTT average value is less than a first threshold, as the RTT average value is increased, a possibility of the fading state is 0 and kept unchanged, and when the RTT average value is greater than or equal to the first threshold and less than a second threshold, as the RTT average value is increased, the possibility of the fading state is increased, and when the RTT average value is greater than or equal to the second threshold, as the RTT average value is increased, the possibility of the fading state is decreased and tends to 0.

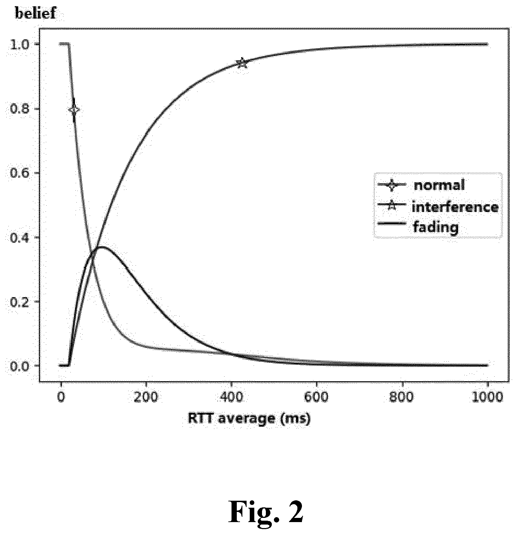

FIG. 2 is a schematic diagram of the relationship between the RTT average value and the probabilities(belief) of the states. As shown in FIG. 2, when the RTT average value is less than the first threshold (for example, 20ms), the probability of the normal state is 1, this is because that most of real-time applications require delay of the first threshold (for example, 20ms), and the probabilities of other states are 0; when the RTT average value is greater than or equal to the first threshold (for example, 20ms) and less than a second threshold (for example, 100ms), the fading and interference states have similar possibilities, probabilities of interference and fading increase, and as the RTT average value increases (greater than or equal to the second threshold, such as 100ms), the probability of the interference increases monotonically and tends to 1, and the probability of fading decreases and tends to 0.

The above description is given by taking that the statistical metric is the RTT average value as an example. However, this embodiment of this disclosure is not limited thereto; for example, the statistical metric may also be the RTT variance, etc., which shall not be described herein any further.

For example, when the measurement parameter is the packet loss number, the statistical metric is a packet loss rate (PLR), and the states include: a normal state, a fading state and an interference state, that is, for a PLR, a probability of the normal state plus a probability of the fading state plus a probability of the interference state is 1, wherein,

a change relationship between the PLR and the possibility of the normal state is the third relationship, in which as the PLR is increased, the probability of the normal state is decreased and trends to 0;

a change relationship between the PLR and the possibility of the interference state is the second relationship, in which as the PLR is increased, the possibility of the interference state is increased and trends to 1;

and a change relationship between the PLR and the possibility of the fading state being a combination of the second relationship and third relationship, in which when the PLR is less than a third threshold, as the PLR is increased, the possibility of the fading state is increased, when the PLR is greater than or equal to a third threshold, as the PLR is increased, the possibility of the fading state is decreased and trends to 0.

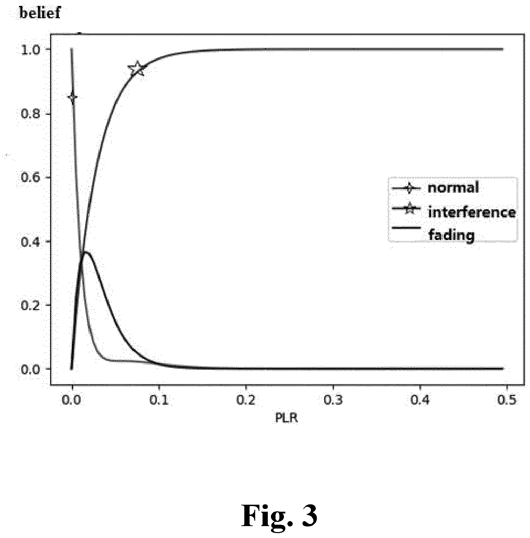

FIG. 3 is a schematic diagram of the change relationship between the PLR and the probabilities(belief) of the states. As shown in FIG. 3, what is different from the RTT average value is that there is no platform at the beginning of the change relationship between the PLR and the probabilities of the states. As the increase in packet loss means that a communication error occurs, such as occurrence of interference or fading, that is, as the PLR is increased, the probability of the normal state is decreased monotonically and tends to 0, the probability of the interference state is increased monotonically and tends to 1, and the probability of fading state is increased first and then decreased and tends to 0; wherein the fading state and the interference state have similar possibilities when the PLR is less than the third threshold, that is, as the PLR increases, the probability is increased, the probability of interference state is monotonically increased and tends to 1, and the probability of the fading state is decreased and tends to 0 when the PLR is greater than or equal to the third threshold.

For example, when the measurement parameter is RSSI, the statistical metric is RSSI standard deviation, and the states include: a normal state, a fading state and an interference state, that is, for a PLR, a probability of the normal state plus a probability of the fading state plus a probability of the interference state is 1, wherein,

a change relationship between the RSSI standard deviation and the possibility of the normal state is the third relationship, in which as the RSSI standard deviation is increased, the probability of the normal state is decreased and trends to 0;

a change relationship between the RSSI standard deviation and the possibility of the fading state is the second relationship, in which as the RSSI standard deviation is increased, the possibility of the fading state is increased and trends to 1; and a change relationship between the RSSI standard deviation and the possibility of the interference state is a combination of the second relationship and third relationship, in which when the RSSI standard deviation is less than a fourth threshold, as the RSSI standard deviation is increased, the possibility of the interference state is increased, and when the RSSI standard deviation is greater than or equal to the fourth threshold, as the RSSI standard deviation is increased, the possibility of the interference state is decreased and trends to 0.

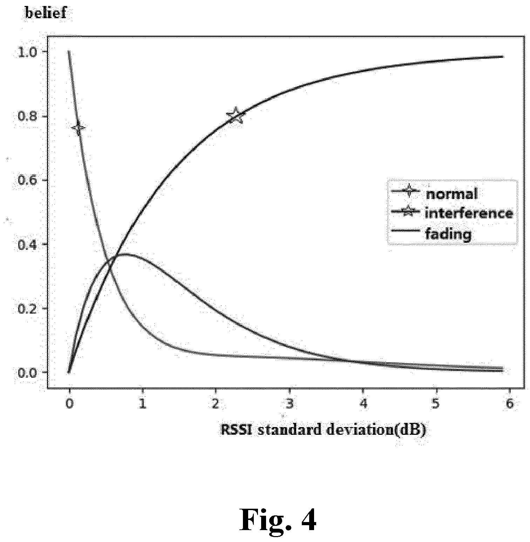

FIG. 4 is a schematic diagram of the relationship between the RSSI standard deviation and the probabilities(belief) of the states. As shown in FIG. 4, the RSSI standard deviation may well reflect the fading state. As the RSSI standard deviation increases, the probability of the fading state is monotonously increased and tends to 1, the probability of the normal state is decreased monotonically and tends to 0, and the probability of interference state is increased and then decreased and tends to 0; wherein when the RSSI standard deviation is less than a fourth threshold, the probabilities of the fading state and the interference state are increased as the RSSI standard deviation increases, and when the RSSI standard deviation is greater than or equal to the fourth threshold, the probability of the interference state is decreased and tends to 0, and the probability of the fading state is increased and tends to 1.

The above description is given by taking that the statistical metric is the RSSI as an example. However, this embodiment of this disclosure is not limited thereto; for example, the statistical metric may also be the RSSI variance, and the RSSI gradient, etc., which shall not be described herein any further.

The above first threshold, the second threshold, the third threshold and the fourth threshold may be determined experimentally or empirically, and are related to an actual environment, and the embodiments of this disclosure is not limited thereto.

In the embodiment of this disclosure, the change relationship between the statistical metrics and the possibilities of the states may be determined in the above method. After determining the change relationship between the statistical metrics and the possibilities of the states, the method may further include (not shown): a form of a belief function indicative of the change relationship between the statistical metrics and the possibilities of the states is determined, and function fitting on training data points is performed according to the form of the belief function to determine a value of a parameter of the belief function (such as a, b, c, and d). Thus, with the function fitting method, the belief function of the change relationship between the statistical metrics and the possibilities of the states may be determined, hence, the probabilities of the states, i.e. basic probability assignment of the states by final statistical metrics, may be accurately determined according to the belief function and the statistical metrics.

In the embodiment of this disclosure, after the above change relationship is determined, a form of a belief function that conforms to the change relationship may be selected to represent the change relationship, but parameters of the belief function need to be obtained further according to training data points, which will be described below by way of examples.

For example, when the statistical metric is the RTT average value, the change relationship between the RTT average value and the fading state is represented by the corresponding curve in FIG. 2. According to the curve, a belief function, i.e. a mathematical model, which is not unique, that meets a condition, is selected. For example, a model that meets a condition may be selected, which is denoted by a function $m^F(x)=b(x-d)e^{-c(x-d)}$. Similarly, a belief function of the RTT average value on the interference state may be denoted by a function $m^{(I)}(x) = 1-e^{-a(x-d)}$, and a belief function of the RTT average value on the normal state may be denoted by a function $m^{(N)}(x) = 1-m^{(F)}(x) - m^{(I)}(x)$; where, x denotes the function variable(statistical metric), and a, b, c and d denote parameters of the belief function; and fitting is performed respectively on the above functions by using the training data points. For example, a large number of RTT average values are respectively obtained in advance in the normal state, the fading state and the interference state, the probabilities of the normal, fading and interference states to which different RTT average values correspond (i.e. a probability = the number of occurrences of an RTT average value at a state /the number of occurrences of the RTT average value at all states) are calculated to obtain the training data points, in which values of the parameters a, b, c and d may be obtained. Hence, the belief functions of the statistical metrics on the fading, interference and normal states may respectively be determined as:

$$m^{(F)}(x) = 0.013(x-20)e^{-0.013(x-20)}, \ m^{(I)}(x) = 1-e^{-0.007(x-20)}, \ m^{(N)}(x) = 1 - m^{(F)}(x) - m^{(I)}(x).$$

For example, when the statistical metric is the PLR, the change relationship between the PLR and the probabilities of the fading state is represented by the corresponding curve in FIG. 3. According to the curve, a belief function, i.e. a mathematical model, which is not unique, that meets a condition, is selected. For example, a model that meets a condition may be selected, which is denoted by a function $m^{(F)}(x) = bxe^{-cx}$, the belief function of the PLR on the interference state is denoted by a function $m^{(I)}(x) = 1-e^{-ax}$, and the belief function of the PLR on the normal state is denoted by a function $m^{(N)}(x) = 1 - m^{(F)}(x) - m^{(I)}(x)$; where, x denotes the function variable(statistical metric), and a, b and c denote parameters of the belief function; and fitting is performed respectively on the above functions by using the training data points. For example, a large number of PLRs are respectively obtained in advance in the normal state, the fading state and the interference state, the probabilities of the normal, fading and interference states to which different PLRs correspond (i.e. a probability = the number of occurrences of an PLR at a state /the number of occurrences of the PLR at all states) are calculated to obtain the training data points, in which values of the parameters a, b and c may be obtained. Hence, the belief functions of the statistical metrics on the fading, interference and normal states may respectively be determined as:

$$m^{(F)}(x) = 1\text{-}e^{-0.7x}, \, m^{(I)}(x) = 1.3xe^{-1.3x}, \, m^{(N)}(x) = 1 - m^{(F)}(x) - m^{(I)}(x).$$

For example, when the statistical metric is the RSSI standard deviation, the change relationship between the RSSI standard deviation and the fading state is represented by the corresponding curve in FIG. 4. According to the curve, a belief function, i.e. a mathematical model, which is not unique, that meets a condition, is selected. For example, a model that meets a condition may be selected, which is denoted by a function $m^{(F)}(x) = 1\text{-}e^{ax}$, the belief function of the RSSI standard deviation and the interference state is denoted by a function $m^{(I)}(x) = bxe^{-cx}$, and the belief function of the RSSI standard deviation and the normal state is denoted by a function $m^{(N)}(x) = 1 - m^{(F)}(x) - m^{(I)}(x)$; where, x denotes the function variable(statistical metric), and a, b and c denote parameters of the belief function; and fitting is performed respectively on the above functions by using the training data points. For example, a large number of pieces of RSSI standard deviation are respectively obtained in advance in the normal state, the fading state and the interference state, the probabilities of the normal, fading and interference states to which different pieces of RSSI standard deviation correspond (i.e. a probability = the number of occurrences of RSSI standard deviation at a state /the number of occurrences of the RSSI standard deviation at all states) are calculated to obtain the training data points, in which values of the parameters a, b and c may be obtained. Hence, the belief functions of the statistical metrics on the fading, interference and normal states may respectively be determined as:

$$m_3^{(F)}(x) = 60xe^{-60x}, \quad m_3^{(I)}(x) = 1\text{-}e^{-35x}, \, m^{(N)}(x) = 1 - m^{(F)}(x) - m^{(I)}(x).$$

It should be noted that the above selected belief functions are examples only, the embodiments of this disclosure is not limited thereto, and other belief functions that conform to the above change relationships are also applicable to the embodiment of this disclosure.

In operation 104, fusion processing is performed on the possibilities of the states reflected by a plurality of statistical metrics of the link to be monitored to determine the state of the link to be monitored.

For example, according to weights of a plurality of statistical metrics, the fusion processing is performed on the possibilities of the states of a plurality of statistical metrics. The weights of a plurality of statistical metrics may be set on demand, for example, their respective weights are determined according to such factors as importance, and correlation, of the parameters.

In this way, by performing fusion processing by setting the weights, the accuracy of the fusion result may further be improved.

In the embodiment of this disclosure, reference may be made to an existing data fusion method for the fusion processing, such as classifier fusion, D-S (Dempster-Shafer) algorithm fusion, and the like. By using the D-S algorithm for fusion, the accuracy of the fusion result may further be improved. In the embodiment of this disclosure, description is given by taking the D-S algorithm as an example. For example, fusion processing may be performed on possibilities of states of two types of statistical metrics.

In the embodiment of this disclosure, formula (1) below may be used to calculate fusion results of the two types of statistical metrics:

$$m_{12}(A) = \frac{\sum_{B \cap C = A} m_1(B) * m_2(C)}{1 - \sum_{B \cap C = \varnothing} m_1(B) * m_2(C)}, \forall A \neq \varnothing \tag{1};$$

where, $m_{12}(A)$ denotes possibilities of states after statistical metric 1 and statistical metric 2 are fused, $m_1(B)$ denotes a possibility when a state of statistical metric 1 is B, and $m_2(C)$ denotes a possibility when a state of statistical metric 2 is C.

In the embodiment of this disclosure, when data of more than two types of parameters needs to be fused, the fusion may be performed sequentially. A method for fusing two by two each time may be similar to above formula (1), which shall not be described herein any further.

According to the above fusion results, a maximum value of the possibilities is determined, and the state to which the maximum value corresponds is determined as a current state of the link to be monitored.

In the embodiment of this disclosure, execution subjects of the operations may be determined according to application demands and analysis complexities.

For example, operations 101-104 may all be executed by a terminal device, or a network node, or a station; for example, operations 101-102 may be performed by a terminal device, or a network node, or a station, in which the terminal device, or the network node, or the station transmits a plurality of statistical metrics obtained through calculation in operation 102 to an access point, and the access point executes operations 103-104;

for another example, operations 101-102 may be performed by a terminal device, or a network node, or a station, in which the terminal device, or the network node, or the station transmits a plurality of statistical metrics obtained through calculation in a plurality of 102 to an access point, the access point forwards a plurality of statistical metrics to a router, or a gateway, or a central processor, or cloud, and the router, or the gateway, or the central processor, or the cloud executes operations 103-104.

In this way, the execution subjects of the operations may be determined according to the application demands and analysis complexities, thereby flexibly performing configuration to ensure the overall performance of the network.

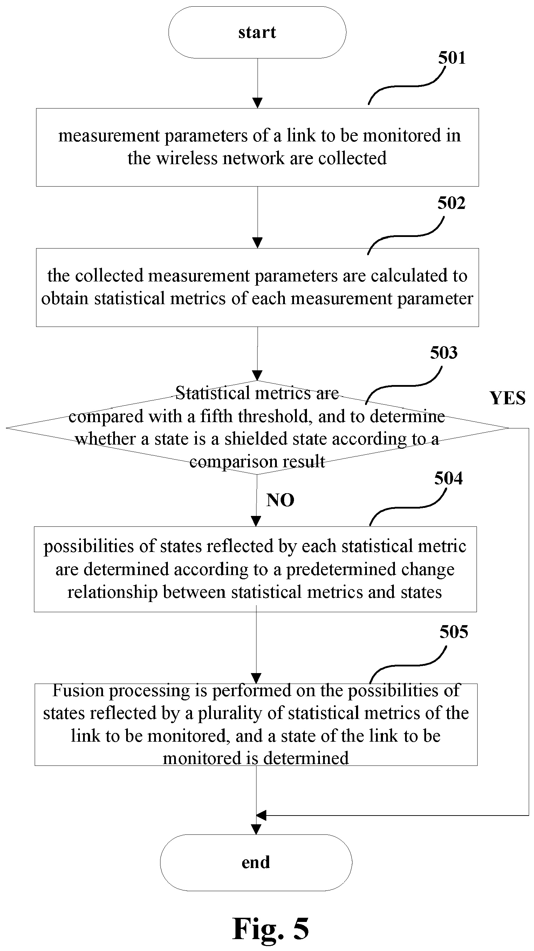

In the embodiment of this disclosure, for certain types of states, such as shielding, the method of data fusion is not needed, and whether the state is present may be directly identified via certain statistical metrics. Hence, the embodiment of this disclosure further provides a state monitoring method for a wireless network. FIG. 5 is a flowchart of the state monitoring method for a wireless network. As shown in FIG. 5, the method includes:

operation 501: measurement parameters of a link to be monitored in the wireless network are collected;

operation 502: the collected measurement parameters are calculated to obtain statistical metrics of each measurement parameter;

operation 503: the statistical metrics are compared with a fifth threshold, and to determine whether a state is a shielded state according to a comparison result, and operation 504 is executed if the comparison result is no, otherwise, operation is terminated;

operation 504: possibilities of states reflected by each statistical metric are determined according to a predetermined change relationship between statistical metrics and states; and

operation 505: fusion processing is performed on the possibilities of states reflected by a plurality of statistical metrics of the link to be monitored, and a state of the link to be monitored is determined.

In an embodiment, reference may be made to operations 101-104 for implementations of operations 501-502 and 504-505, which shall not be described herein any further.

In operation 503, the statistical metric may be an RSSI drop value, which represents a drop value of an RSSI average value in a period relative to an RSSI average value in a preceding period. When the RSSI drop value is greater than a fifth threshold, the state is determined as a shielded state, and the fifth threshold may be determined as demanded, for example, it may be set to be 10 dB.

It can be seen from the above embodiment that the possibilities of the states reflected by the statistical metrics are determined according to a predetermined change relationship between statistical metrics and possibilities of states, fusion processing is performed on the possibilities of states to obtain the possibilities of the states of the link to be monitored, and a state of the link to be monitored is determined. The network state may be efficiently monitored, and accuracy of the monitoring result may be improved.

Embodiment 2

The embodiment of this disclosure provides a state monitoring apparatus for a wireless network. As a principle of the apparatus for solving problems is similar to that of the method in Embodiment 1, reference may be made to the implementation of the method in Embodiment 1 for implementation of the apparatus, with identical contents being not going to be described herein any further.

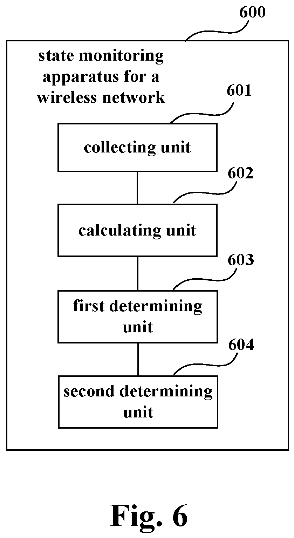

FIG. 6 is a schematic diagram of the state monitoring apparatus for a wireless network in Embodiment 2 of this disclosure. As shown in FIG. 6, a state monitoring apparatus 600 for a wireless network includes:

a collecting unit 601 configured to collect measurement parameters of a link to be monitored in the wireless network;

a calculating unit 602 configured to calculate the collected measurement parameters to obtain statistical metrics of each measurement parameter;

a first determining unit 603 configured to, according to a predetermined change relationship between statistical metrics and possibilities of states, determine a possibility of each state reflected by each statistical metric; and

a second determining unit 604 configured to perform fusion processing on the possibilities of states reflected by a plurality of statistical metrics of the link to be monitored, and determine a state of the link to be monitored.

In this embodiment, implementations of the collecting unit 601, the calculating unit 602, the first determining unit 603 and the second determining unit 604 are similar to those of operations 101-104, which shall not be described herein any further.

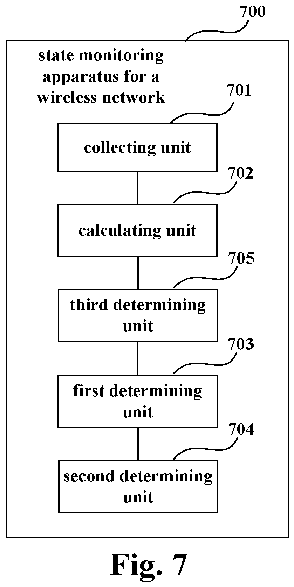

FIG. 7 is a schematic diagram of the state monitoring apparatus for a wireless network in Embodiment 2 of this disclosure. As shown in FIG. 7, a state monitoring apparatus 700 for a wireless network includes a collecting unit 701, a calculating unit 702, a first determining unit 703 and a second determining unit 704, implementations of which being similar to those of the collecting unit 601, the calculating unit 602, the first determining unit 603 and the second determining unit 604, which shall not be described herein any further.

As shown in FIG. 7, the apparatus may further include:

a third determining unit 705 configured to determine the change relationship between statistical metrics and possibilities of states, the change relationship including one of the following relationships, or a combination of at least two thereof: a first relationship in which a possibility of a state is unchanged as a statistical metric is changed, a second relationship in which a possibility of a state is increased as a statistical metric is increased, and a third relationship in which a possibility of a state is decreased as a statistical metric is increased.

In the embodiment of this disclosure, reference may be made to Embodiment 1 for the change relationship between statistical metrics and possibilities of states, which shall not be described herein any further.

In the embodiment of this disclosure, the third determining unit 705 is further configured to determine a form of a belief function indicative of the change relationship between the statistical metrics and the possibilities of the states after determining the change relationship, and perform function fitting on training data points according to the form of the belief function to determine a value of a parameter of the belief function.

In the embodiment of this disclosure, reference may be made to Embodiment 1 for the belief function of the statistical metrics and the possibilities, which shall not be described herein any further.

In the embodiment of this disclosure, alternatively, the apparatus may further include (not shown):

a comparing unit configured to compare the statistical metrics with a fifth threshold; and
a determining unit configured to determine whether a state is a shielded state according to a comparison result of the comparing unit;
and when the state is not a shielded state, the first determining unit 703 determines the possibilities of the states of each statistical metric.

In this embodiment, implementations of the comparing unit and determining unit are similar to that of operation 503, which shall not be described herein any further.

It can be seen from the above embodiment that the possibilities of the states reflected by the statistical metrics are determined according to a predetermined change relationship between statistical metrics and possibilities of states, fusion processing is performed on the possibilities of states to obtain the possibilities of the states of the link to be monitored, and a state of the link to be monitored is determined. The network state may be efficiently monitored, and accuracy of the monitoring result may be improved.

Embodiment 3

The embodiment of this disclosure provides a terminal device, or a network node, or a station, including the state monitoring apparatus for a wireless network as described in Embodiment 2.

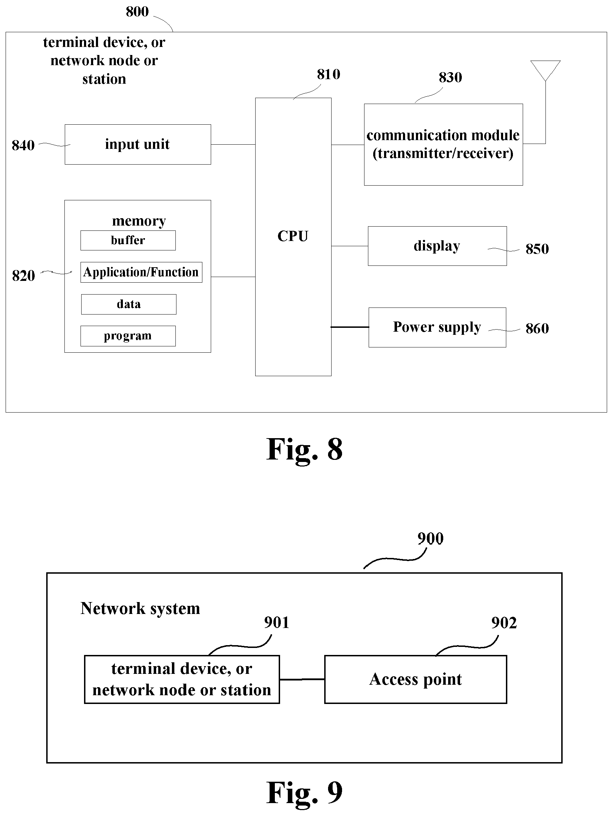

FIG. 8 is a schematic diagram of a structure of an implementation of the terminal device, or the network node or the station in the embodiment of this disclosure. As shown in FIG. 8, a terminal device, or a network node or a station 800 may include a central processing unit (CPU) 810 and a memory 820, the memory 820 being coupled to the central processing unit 810. It should be noted that his figure is illustrative only, and other types of structures may also be used, so as to supplement or replace this structure and achieve a telecommunications function or other functions.

In one implementation, the functions of the state monitoring apparatus for a wireless network as described in Embodiment 2 may be integrated into the central processing unit 810, wherein the central processing unit 810 may be configured to carry out the state monitoring method for a wireless network described in Embodiment 1. For example, the central processing unit 810 may be configured to: collect measurement parameters of a link to be monitored in the wireless network; calculate the collected measurement parameters to obtain statistical metrics of each measurement parameter; according to a predetermined change relationship between statistical metrics and possibilities of states, determine a possibility of each state reflected by each statistical metric; and perform fusion processing on the possibilities of states reflected by a plurality of statistical metrics of the link to be monitored, and determine a state of the link to be monitored.

For example, the central processing unit 810 may further be configured to: determine the change relationship between statistical metrics and possibilities of states, the change relationship including one of the following relationships, or a combination of at least two thereof: a first relationship in which a possibility of a state is unchanged as a statistical metric is changed, a second relationship in which a possibility of a state is increased as a statistical metric is increased, and a third relationship in which a possibility of a state is decreased as a statistical metric is increased.

For example, the central processing unit 810 may further be configured to: determine a form of a belief function indicative of the change relationship between the statistical metrics and the possibilities of the states after determining the change relationship, and perform function fitting on training data points according to the form of the belief function to determine a value of a parameter of the belief function. Reference may be made to Embodiment 1 for meanings of the change relationship, the belief function, the measurement parameters, the statistical metrics and the states, which shall not be described herein any further.

In another implementation, the state monitoring apparatus for a wireless network described in Embodiment 2 and the central processing unit 810 may be configured separately; for example, the state monitoring apparatus for a wireless network described in Embodiment 2 may be configured as a chip connected to the central processing unit 810, and the functions of the state monitoring apparatus for a wireless network described in Embodiment 2 are executed under control of the central processing unit 810.

Furthermore, as shown in FIG. 8, the terminal device, or the network node or the station 800 may include a communication module 830, an input unit 840, a display 850, and a power supply 860. It should be noted that the terminal device, or the network node or the station 800 does not necessarily include all the parts shown in FIG. 8. Furthermore, the terminal device, or the network node or the station 800 may include parts not shown in FIG. 8, and the related art may be referred to.

As shown in FIG. 8, the central processing unit 810 is sometimes referred to as a controller or control, which may include a microprocessor or other processor devices and/or logic devices, and the central processing unit 810 receives input and controls operations of every component of the terminal device, or the network node or the station 800.

The memory 820 may be, for example, one or more of a buffer memory, a flash memory, a hard drive, a mobile medium, a volatile memory, a nonvolatile memory, or other suitable devices, which may store the information on configuration, etc., and furthermore, store programs executing related information. And the central processing unit 810 may execute programs stored in the memory 820, so as to realize information storage or processing, etc. Functions of other parts are similar to those of the related art, which shall not be described herein any further. The parts of the terminal device, or the network node or the station 800 may be realized by specific hardware, firmware, software, or any combination thereof, without departing from the scope of this disclosure.

It can be seen from the above embodiment that the possibilities of the states reflected by the statistical metrics are determined according to a predetermined change relationship between statistical metrics and possibilities of states, fusion processing is performed on the possibilities of states to obtain the possibilities of the states of the link to be monitored, and a state of the link to be monitored is determined. The network state may be efficiently monitored, and accuracy of the monitoring result may be improved.

Embodiment 4

The embodiment of this disclosure provides a network system, including a terminal device, or network node, or station, and an access point. FIG. 9 is a schematic diagram of the network system in Embodiment 4 of this disclosure. As shown in FIG. 9, a network system 900 includes a terminal device, or network node, or station 901, and an access point 902; wherein,

the terminal device, or network node or station 901 is configured to: collect measurement parameters of a link to be monitored in the wireless network; calculate the collected measurement parameters to obtain statistical metrics of each measurement parameter; and transmit the statistical metrics to the access point;

and the access point 902 is configured to: according to a predetermined change relationship between statistical metrics and possibilities of states, determine a possibility of each state reflected by each statistical metric; and perform fusion processing on the possibilities of states reflected by a plurality of statistical metrics of the link to be monitored, and determine a state of the link to be monitored.

For example, the access point 902 may further be configured to: determine the change relationship between statistical metrics and possibilities of states; and determine a form of a belief function indicative of the change relationship, and perform function fitting on training data points according to the form of the belief function to determine a value of a parameter of the belief function. The change relationship includes one of the following relationships, or a combination of at least two thereof: a first relationship in which a possibility of a state is unchanged as a statistical metric is changed, a second relationship in which a possibility of a state is increased as a statistical metric is increased, and a third relationship in which a possibility of a state is decreased as a statistical metric is increased.

In the embodiment of this disclosure, reference may be made to the implementation of the method in Embodiment 1 for the above functions executed by the terminal device, or network node, or station 901, and the access point 902, which shall not be described herein any further.

It can be seen from the above embodiment that the possibilities of the states reflected by the statistical metrics are determined according to a predetermined change relationship between statistical metrics and possibilities of states, fusion processing is performed on the possibilities of states to obtain the possibilities of the states of the link to be monitored, and a state of the link to be monitored is determined. The network state may be efficiently monitored, and accuracy of the monitoring result may be improved.

Embodiment 5

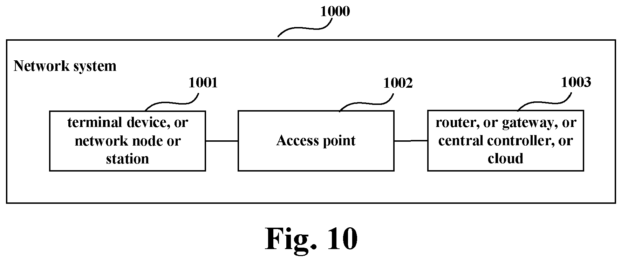

The embodiment of this disclosure provides a network system, including a terminal device, or network node, or station, and an access point, or a router, or gateway, or central controller, or cloud. FIG. 10 is a schematic diagram of the network system in Embodiment 5 of this disclosure. As shown in FIG. 10, a network system 1000 includes a terminal device, or a network node, or a station 1001, and an access point 1002, or a router, or a gateway, or a central controller, or a cloud 1003; wherein,
the terminal device, or the network node or the station 1001 is configured to: collect measurement parameters of a link to be monitored in the wireless network; calculate the collected measurement parameters to obtain statistical metrics of each measurement parameter; and transmit the statistical metrics to the access point;
the access point 1002 is configured to: transmit the statistical metrics to the router, or gateway, or central controller, or cloud;
and the router, or the gateway, or the central controller, or the cloud 1003 is configured to: according to a predetermined change relationship between statistical metrics and possibilities of states, determine a possibility of each state reflected by each statistical metric; and perform fusion processing on the possibilities of states reflected by a plurality of statistical metrics of the link to be monitored, and determine a state of the link to be monitored.

For example, the router, or the gateway, or the central controller, or the cloud 1003 may further be configured to: determine the change relationship between statistical metrics and possibilities of states; and determine a form of a belief function indicative of the change relationship, and perform function fitting on training data points according to the form of the belief function to determine a value of a parameter of the belief function. The change relationship includes one of the following relationships, or a combination of at least two thereof: a first relationship in which a possibility of a state is unchanged as a statistical metric is changed, a second relationship in which a possibility of a state is increased as a statistical metric is increased, and a third relationship in which a possibility of a state is decreased as a statistical metric is increased.

In the embodiment of this disclosure, reference may be made to the implementation of the method in Embodiment 1 for the above functions executed by the terminal device, or network node, or station 1001, and the access point 1002, and the router, or gateway, or central controller, or cloud 1003, which shall not be described herein any further.

It can be seen from the above embodiment that the possibilities of the states reflected by the statistical metrics are determined according to a predetermined change relationship between statistical metrics and possibilities of states, fusion processing is performed on the possibilities of states to obtain the possibilities of the states of the link to be monitored, and a state of the link to be monitored is determined. The network state may be efficiently monitored, and accuracy of the monitoring result may be improved.

An embodiment of the present disclosure provides a computer readable program code, which, when executed in a state monitoring apparatus for a wireless network, will cause a computer to carry out the state monitoring method for a wireless network as described in Embodiment 1 in the state monitoring apparatus for a wireless network.

An embodiment of the present disclosure provides a computer storage medium, including a computer readable program code, which will cause a computer to carry out the state monitoring method for a wireless network as described in Embodiment 1 in a state monitoring apparatus for a wireless network.

The method carried out in the state monitoring method for a wireless network as described with reference to the embodiments of this disclosure may be directly embodied as hardware, software modules executed by a processor, or a combination thereof. For example, one or more functional block diagrams and/or one or more combinations of the functional block diagrams shown in FIGs. 6-10 may either correspond to software modules of procedures of a computer program, or correspond to hardware modules. Such software modules may respectively correspond to the operations shown in FIGs. 1 and 5. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIGs. 6-10 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIGs. 6-10 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

As to implementations containing the above embodiments, following supplements are further discloses.

Supplement 1. A state monitoring apparatus for a wireless network, the apparatus including:

a collecting unit configured to collect measurement parameters of a link to be monitored in the wireless network;
a calculating unit configured to calculate the collected measurement parameters to obtain statistical metrics of each measurement parameter;
a first determining unit configured to, according to a predetermined change relationship between statistical metrics and possibilities of states, determine a possibility of each state reflected by each statistical metric; and
a second determining unit configured to perform fusion processing on the possibilities of states reflected by a plurality of statistical metrics of the link to be monitored, and determine a state of the link to be monitored.

Supplement 2. The apparatus according to supplement 1, wherein the apparatus further includes:
a third determining unit configured to determine the change relationship between statistical metrics and possibilities of states, the change relationship including one of the following relationships, or a combination of at least two thereof:
a first relationship in which a possibility of a state is unchanged as a statistical metric is changed, a second relationship in which a possibility of a state is increased as a statistical metric is increased, and a third relationship in which a possibility of a state is decreased as a statistical metric is increased.

Supplement 3. The apparatus according to supplement 2, wherein the measurement parameters include at least two of the following parameters: a roundtrip delay RTT, a packet loss number, and a received signal strength indicator (RSSI); and the states include: a normal state, a fading state and an interference state.

Supplement 4. The apparatus according to supplement 3, when the measurement parameter is an RTT, the statistical metric is an RTT average value, and a change relationship between the RTT average value and a possibility of the normal state is a combination of the first relationship and the third relationship, in which when the RTT average value is less than a first threshold, as the RTT average value is increased, a possibility of the normal state is 1 and kept unchanged, and when the RTT average value is greater than or equal to the first threshold, as the RTT average value is increased, the possibility of the normal state is decreased and tends to 0;
a change relationship between the RTT average value and a possibility of the interference state is a combination of the first relationship and the second relationship, in which when the RTT average value is less than a first threshold, as the RTT average value is increased, a possibility of the interference state is 0 and kept unchanged, and when the RTT average value is greater than or equal to the first threshold, as the RTT average value is increased, the possibility of the interference state is increased and tends to 1;
and a change relationship between the RTT average value and a possibility of the fading state is a combination of the first relationship, the second relationship and the third relationship, in which when the RTT average value is less than a first threshold, as the RTT average value is increased, a possibility of the fading state is 0 and kept unchanged, and when the RTT average value is greater than or equal to the first threshold and less than a second threshold, as the RTT average value is increased, the possibility of the fading state is increased, and when the RTT average value is greater than or equal to the second threshold, as the RTT average value is increased, the possibility of the fading state is decreased and tends to 0.

Supplement 5. The apparatus according to supplement 3, wherein when the measurement parameter is the packet loss number, the statistical metric is a packet loss rate (PLR), a change relationship between the PLR and the possibility of the normal state being the third relationship, in which as the PLR is increased, the probability of the normal state is decreased and trends to 0;
a change relationship between the PLR and the possibility of the interference state being the second relationship, in which as the PLR is increased, the possibility of the interference state is increased and trends to 1;

and a change relationship between the PLR and the possibility of the fading state being a combination of the second relationship and third relationship, in which when the PLR is less than a third threshold, as the PLR is increased, the possibility of the fading state is increased, when the PLR is greater than or equal to a third threshold, as the PLR is increased, the possibility of the fading state is decreased and trends to 0.

Supplement 6. The apparatus according to supplement 3, when the measurement parameter is the RSSI, the statistical metric is RSSI standard deviation, a change relationship between the RSSI standard deviation and the possibility of the normal state being the third relationship, in which as the RSSI standard deviation is increased, the probability of the normal state is decreased and trends to 0;

a change relationship between the RSSI standard deviation and the possibility of the fading state being the second relationship, in which as the RSSI standard deviation is increased, the possibility of the fading state is increased and trends to 1;

and a change relationship between the RSSI standard deviation and the possibility of the interference state being a combination of the second relationship and third relationship, in which when the RSSI standard deviation is less than a fourth threshold, as the RSSI standard deviation is increased, the possibility of the interference state is increased, and when the RSSI standard deviation is greater than or equal to the fourth threshold, as the RSSI standard deviation is increased, the possibility of the interference state is decreased and trends to 0.

Supplement 7. The apparatus according to supplement 2, wherein the third determining unit is further configured to determine a form of a belief function indicative of the change relationship between the statistical metrics and the possibilities of the states after determining the change relationship, and perform function fitting on training data points according to the form of the belief function to determine a value of a parameter of the belief function.

Supplement 8. The apparatus according to supplement 7, wherein when the statistical metric is the RTT average value, the belief function of the RTT average value on the fading state is denoted by a function $m^{(F)}(x)=b(x-d)e^{-c(x-d)}$, the belief function of the RTT average value on the interference state is denoted by a function $m^{(I)}(x) = 1-e^{-a(x-d)}$, and the belief function of the RTT average value on the normal state is denoted by a function $m^{(N)}(x) = 1 - m^{(F)}(x) - m^{(I)}(x)$; where, x denotes a function variable, and a, b, c and d denote parameters of the belief function;

when the statistical metric is the PLR, the belief function of the PLR on the fading state is denoted by a function $m^{(F)}(x) = bxe^{-cx}$, the belief function of the PLR on the interference state is denoted by a function $m^{(I)}(x) = 1-e^{-ax}$, and the belief function of the PLR on the normal state is denoted by a function $m^{(N)}(x) = 1 - m^{(F)}(x) - m^{(I)}(x)$; where, x denotes the function variable, and a, b and c denote parameters of the belief function;

and when the statistical metric is the RSSI standard deviation, the belief function of the RSSI standard deviation and the fading state is denoted by a function $m^{(F)}(x) = 1-e^{-ax}$, the belief function of the RSSI standard deviation and the interference state is denoted by a function $m^{(I)}(x) = bxe^{-cx}$, and the belief function of the RSSI standard deviation and the normal state is denoted by a function $m^{(N)}(x) = 1 - m^{(F)}(x) - m^{(I)}(x)$; where, x denotes the function variable, and a, b and c denote parameters of the belief function.

Supplement 9. The apparatus according to supplement 1, wherein the apparatus further includes:

a comparing unit configured to compare the statistical metrics with a fifth threshold; and
a determining unit configured to determine whether a state is a shielded state according to a comparison result of the comparing unit;
and when the state is not a shielded state, the first determining unit determines the possibilities of the states of each statistical metric.

Supplement 10. A state monitoring method for a wireless network, the method including:

collecting measurement parameters of a link to be monitored in the wireless network;
calculating the collected measurement parameters to obtain statistical metrics of each measurement parameter;
according to a predetermined change relationship between statistical metrics and possibilities of states, determining a possibility of each state reflected by each statistical metric; and
performing fusion processing on the possibilities of states reflected by a plurality of statistical metrics of the link to be monitored, and determining a state of the link to be monitored.

Supplement 11. The method according to supplement 10, wherein the method further includes:
determining the change relationship between statistical metrics and possibilities of states, the change relationship including one of the following relationships, or a combination of at least two thereof: a first relationship in which a possibility of a state is unchanged as a statistical metric is changed, a second relationship in which a possibility of a state is increased as a statistical metric is increased, and a third relationship in which a possibility of a state is decreased as a statistical metric is increased.

Supplement 12. The method according to supplement 11, wherein the measurement parameters include at least two of the following parameters: a roundtrip delay RTT, a packet loss number, and a received signal strength indicator (RSSI); and the states include: a normal state, a fading state and an interference state.

Supplement 13. The method according to supplement 12, wherein when the measurement parameter is an RTT, the statistical metric is an RTT average value, and a change relationship between the RTT average value and a possibility of the normal state is a combination of the first relationship and the third relationship, in which when the RTT average value is less than a first threshold, as the RTT average value is increased, a possibility of the normal state is 1 and kept unchanged, and when the RTT average value is greater than or equal to the first threshold, as the RTT average value is increased, the possibility of the normal state is decreased and tends to 0;

a change relationship between the RTT average value and a possibility of the interference state is a combination of the first relationship and the second relationship, in which when the RTT average value is less than a first threshold, as the RTT average value is increased, a possibility of the interference state is 0 and kept unchanged, and when the RTT average value is greater than or equal to the first threshold, as the RTT average value is increased, the possibility of the interference state is increased and tends to 1;

and a change relationship between the RTT average value and a possibility of the fading state is a combination of the first relationship, the second relationship and the third relationship, in which when the RTT average value is less than a first threshold, as the RTT average value is increased, a possibility of the fading state is 0 and kept unchanged, and when the RTT average value is greater than or equal to the first threshold and less than a second threshold, as the RTT average value is increased, the possibility of the fading state is increased, and when the RTT average value is greater than or equal to the second threshold, as the RTT average value is increased, the possibility of the fading state is decreased and tends to 0.

Supplement 14. The method according to supplement 12, wherein when the measurement parameter is the packet loss number, the statistical metric is a packet loss rate (PLR), a change relationship between the PLR and the possibility of the normal state being the third relationship, in which as the PLR is increased, the probability of the normal state is decreased and trends to 0;

a change relationship between the PLR and the possibility of the interference state being the second relationship, in which as the PLR is increased, the possibility of the interference state is increased and trends to 1;

and a change relationship between the PLR and the possibility of the fading state being a combination of the second relationship and third relationship, in which when the PLR is less than a third threshold, as the PLR is increased, the possibility of the fading state is increased, when the PLR is greater than or equal to a third threshold, as the PLR is increased, the possibility of the fading state is decreased and trends to 0.

Supplement 15. The method according to supplement 12, wherein when the measurement parameter is the RSSI, the statistical metric is RSSI standard deviation, a change relationship between the RSSI standard deviation and the possibility of the normal state being the third relationship, in which as the RSSI standard deviation is increased, the probability of the normal state is decreased and trends to 0;

a change relationship between the RSSI standard deviation and the possibility of the fading state being the second relationship, in which as the RSSI standard deviation is increased, the possibility of the fading state is increased and trends to 1;

and a change relationship between the RSSI standard deviation and the possibility of the interference state being a combination of the second relationship and third relationship, in which when the RSSI standard deviation is less than a fourth threshold, as the RSSI standard deviation is increased, the possibility of the interference state is increased, and when the RSSI standard deviation is greater than or equal to the fourth threshold, as the RSSI standard deviation is increased, the possibility of the interference state is decreased and trends to 0.

Supplement 16. The method according to supplement 11, wherein after determining the change relationship between the statistical metrics and the possibilities of the states, the method further includes:

determining a form of a belief function indicative of the change relationship, and performing function fitting on training data points according to the form of the belief function to determine a value of a parameter of the belief function.

Supplement 17. The method according to supplement 16, wherein when the statistical metric is the RTT average value, the belief function of the RTT average value on the fading state is denoted by a function $m^{(F)}(x)=b(x-d)e^{-c(x-d)}$, the trust function of the RTT average value on the interference state is denoted by a function $m^{(I)}(x) = 1-e^{-a(x-d)}$, and the trust function of the RTT average value on the normal state is denoted by a function $m^{(N)}(x) = 1 - m^{(F)}(x) - m^{(I)}(x)$; where, x denotes the function variable, and a, b, c and d denote parameters of the belief function;

when the statistical metric is the PLR, the belief function of the PLR on the fading state is denoted by a function $m^{(F)}(x) = bxe^{-cx}$, the belief function of the PLR on the interference state is denoted by a function $m^{(I)}(x) = 1-e^{-ax}$, and the belief function of the PLR on the normal state is denoted by a function $m^{(N)}(x) = 1 - m^{(F)}(x) - m^{(I)}(x)$; where, x denotes the function variable, and a, b and c denote parameters of the belief function;

and when the statistical metric is the RSSI standard deviation, the belief function of the RSSI standard deviation and the fading state is denoted by a function $m^{(F)}(x) = 1-e^{-ax}$, the belief function of the RSSI standard deviation and the interference state is denoted by a function $m^{(I)}(x) = bxe^{-cx}$, and the belief function of the RSSI standard deviation and the normal state is denoted by a function $m^{(N)}(x) = 1 - m^{(F)}(x) - m^{(I)}(x)$; where, x denotes the function variable, and a, b and c denote parameters of the belief function.

Supplement 18. The method according to supplement 10, wherein the method further includes:

comparing the statistical metrics with a fifth threshold;
determining whether a state is a shielded state according to a comparison result of the comparing unit; and
when the state is not a shielded state, determining the possibilities of the states of each statistical metric.

**Claims**

1. An apparatus for state monitoring of a wireless network, the apparatus including:

   a memory; and
   a processor coupled to the memory and configured to:

      collect measurement parameters of a link to be monitored in the wireless network;
      calculate the collected measurement parameters to obtain statistical metrics of each measurement parameter;
      determine, according to a predetermined change relationship between the statistical metrics and possibilities of states, a possibility of each state reflected by each statistical metric; and
      perform fusion processing on the possibilities of states reflected by a plurality of statistical metrics of the link to be monitored, and determine a state of the link to be monitored.

2. The apparatus according to claim 1, wherein the predetermined change relationship include one of the following relationships, or a combination of at least two of the following relationships:

   a first relationship in which a possibility of a state is unchanged as a statistical metric is changed,
   a second relationship in which a possibility of a state is increased as a statistical metric is increased, and
   a third relationship in which a possibility of a state is decreased as a statistical metric is increased.

3. The apparatus according to claim 2, wherein the measurement parameters include at least two of the following parameters: a roundtrip delay time (RTT), a packet loss number, and a received signal strength indicator (RSSI); and the states include: a normal state, a fading state and an interference state.

4. The apparatus according to claim 3, wherein when the measurement parameter is an RTT, the statistical metric is an RTT average value, and a change relationship between the RTT average value and a possibility of the normal state is a combination of the first relationship and the third relationship, in which when the RTT average value is less than a first threshold, as the RTT average value is increased, a possibility of the normal state is 1 and kept unchanged, and when the RTT average value is greater than or equal to the first threshold, as the RTT average value is increased, the possibility of the normal state is decreased and tends to 0;
a change relationship between the RTT average value and a possibility of the interference state is a combination of the first relationship and the second relationship, in which when the RTT average value is less than a first threshold, as the RTT average value is increased, a possibility of the interference state is 0 and kept unchanged, and when the RTT average value is greater than or equal to the first threshold, as the RTT average value is increased, the possibility of the interference state is increased and tends to 1; and
a change relationship between the RTT average value and a possibility of the fading state is a combination of the first relationship, the second relationship and the third relationship, in which when the RTT average value is less than a first threshold, as the RTT average value is increased, a possibility of the fading state is 0 and kept unchanged, and when the RTT average value is greater than or equal to the first threshold and less than a second threshold, as the RTT average value is increased, the possibility of the fading state is increased, and when the RTT average value is greater than or equal to the second threshold, as the RTT average value is increased, the possibility of the fading state is decreased and tends to 0.

5. The apparatus according to claim 3, wherein when the measurement parameter is the packet loss number, the statistical metric is a packet loss rate (PLR), a change relationship between the PLR and the possibility of the normal state being the third relationship, in which as the PLR is increased, the probability of the normal state is decreased and trends to 0;

a change relationship between the PLR and the possibility of the interference state being the second relationship, in which as the PLR is increased, the possibility of the interference state is increased and trends to 1; and

a change relationship between the PLR and the possibility of the fading state being a combination of the second relationship and third relationship, in which when the PLR is less than a third threshold, as the PLR is increased, the possibility of the fading state is increased, when the PLR is greater than or equal to a third threshold, as the PLR is increased, the possibility of the fading state is decreased and trends to 0.

6. The apparatus according to claim 3, wherein when the measurement parameter is the RSSI, the statistical metric is RSSI standard deviation, a change relationship between the RSSI standard deviation and the possibility of the normal state being the third relationship, in which as the RSSI standard deviation is increased, the probability of the normal state is decreased and trends to 0;

a change relationship between the RSSI standard deviation and the possibility of the fading state being the second relationship, in which as the RSSI standard deviation is increased, the possibility of the fading state is increased and trends to 1; and

a change relationship between the RSSI standard deviation and the possibility of the interference state being a combination of the second relationship and the third relationship, in which when the RSSI standard deviation is less than a fourth threshold, as the RSSI standard deviation is increased, the possibility of the interference state is increased, and when the RSSI standard deviation is greater than or equal to the fourth threshold, as the RSSI standard deviation is increased, the possibility of the interference state is decreased and trends to 0.

7. The apparatus according to claim 2, wherein the processor is further configured to determine a form of a belief function indicative of the change relationship between the statistical metrics and the possibilities of the states after determining the change relationship, and perform function fitting on training data points according to the form of the belief function to determine a value of a parameter of the belief function.

8. The apparatus according to claim 7, wherein when the statistical metric is the RTT average value, the belief function of the RTT average value on the fading state is denoted by a function $m^{(F)}(x)=b(x-d)e^{-c(x-d)}$, the belief function of the RTT average value on the interference state is denoted by a function $m^{(I)}(x) = 1-e^{-a(x-d)}$, and the belief function of the RTT average value on the normal state is denoted by a function $m^{(N)}(x) = 1 - m^{(F)}(x) - m^{(I)}(x)$; where, x denotes a function variable, and a, b, c and d denote parameters of the belief function;

when the statistical metric is the PLR, the belief function of the PLR on the fading state is denoted by a function $m^{(F)}(x) = bxe^{-cx}$, the belief function of the PLR on the interference state is denoted by a function $m^{(I)}(x) = 1-e^{-ax}$, and the belief function of the PLR on the normal state is denoted by a function $m^{(N)}(x) = 1 - m^{(F)}(x) - m^{(I)}(x)$; where, x denotes a function variable, and a, b and c denote parameters of the belief function; and

when the statistical metric is the RSSI standard deviation, the belief function of the RSSI standard deviation on the fading state is denoted by a function $m^{(F)}(x) = 1-e^{-ax}$, the belief function of the RSSI standard deviation on the interference state is denoted by a function $m^{(I)}(x) = bxe^{-cx}$, and the belief function of the RSSI standard deviation on the normal state is denoted by a function $m^{(N)}(x) = 1 - m^{(F)}(x) - m^{(I)}(x)$; where, x denotes a function variable, and a, b and c denote parameters of the belief function.

9. The apparatus according to claim 1, wherein the processor is further configured to:

compare the statistical metrics with a threshold; and

determine whether a state is a shielded state according to a comparison result of the comparing; and

when the state is not the shielded state, the processor determines the possibilities of the states of each statistical metric.

10. A state monitoring method for a wireless network, the method including:

collecting measurement parameters of a link to be monitored in the wireless network;

calculating the collected measurement parameters to obtain statistical metrics of each measurement parameter;

determining, according to a predetermined change relationship between the statistical metrics and possibilities of states, a possibility of each state reflected by each statistical metric; and

performing fusion processing on the possibilities of states reflected by a plurality of statistical metrics of the link to be monitored, and determining a state of the link to be monitored.

11. The method according to claim 10, wherein the predetermined change relationship includes one of the following relationships, or a combination of at least two the following relationships:

a first relationship in which a possibility of a state is unchanged as a statistical metric is changed,
a second relationship in which a possibility of a state is increased as a statistical metric is increased, and
a third relationship in which a possibility of a state is decreased as a statistical metric is increased.

12. The method according to claim 11, wherein the measurement parameters include at least two of the following parameters: a roundtrip delay time (RTT), a packet loss number, and a received signal strength indicator (RSSI); and the states include: a normal state, a fading state and an interference state.

13. The method according to claim 12, wherein when the measurement parameter is an RTT, the statistical metric is an RTT average value, and a change relationship between the RTT average value and a possibility of the normal state is a combination of the first relationship and the third relationship, in which when the RTT average value is less than a first threshold, as the RTT average value is increased, a possibility of the normal state is 1 and kept unchanged, and when the RTT average value is greater than or equal to the first threshold, as the RTT average value is increased, the possibility of the normal state is decreased and tends to 0;
a change relationship between the RTT average value and a possibility of the interference state is a combination of the first relationship and the second relationship, in which when the RTT average value is less than a first threshold, as the RTT average value is increased, a possibility of the interference state is 0 and kept unchanged, and when the RTT average value is greater than or equal to the first threshold, as the RTT average value is increased, the possibility of the interference state is increased and tends to 1; and
a change relationship between the RTT average value and a possibility of the fading state is a combination of the first relationship, the second relationship and the third relationship, in which when the RTT average value is less than a first threshold, as the RTT average value is increased, a possibility of the fading state is 0 and kept unchanged, and when the RTT average value is greater than or equal to the first threshold and less than a second threshold, as the RTT average value is increased, the possibility of the fading state is increased, and when the RTT average value is greater than or equal to the second threshold, as the RTT average value is increased, the possibility of the fading state is decreased and tends to 0.

14. The method according to claim 12, wherein when the measurement parameter is the packet loss number, the statistical metric is a packet loss rate (PLR), a change relationship between the PLR and the possibility of the normal state being the third relationship, in which as the PLR is increased, the probability of the normal state is decreased and trends to 0;
a change relationship between the PLR and the possibility of the interference state being the second relationship, in which as the PLR is increased, the possibility of the interference state is increased and trends to 1; and
a change relationship between the PLR and the possibility of the fading state being a combination of the second relationship and third relationship, in which when the PLR is less than a third threshold, as the PLR is increased, the possibility of the fading state is increased, when the PLR is greater than or equal to a third threshold, as the PLR is increased, the possibility of the fading state is decreased and trends to 0.

15. The method according to claim 12, wherein when the measurement parameter is the RSSI, the statistical metric is RSSI standard deviation, a change relationship between the RSSI standard deviation and the possibility of the normal state being the third relationship, in which as the RSSI standard deviation is increased, the probability of the normal state is decreased and trends to 0;
a change relationship between the RSSI standard deviation and the possibility of the fading state being the second relationship, in which as the RSSI standard deviation is increased, the possibility of the fading state is increased and trends to 1; and
a change relationship between the RSSI standard deviation and the possibility of the interference state being a combination of the second relationship and third relationship, in which when the RSSI standard deviation is less than a fourth threshold, as the RSSI standard deviation is increased, the possibility of the interference state is increased, and when the RSSI standard deviation is greater than or equal to the fourth threshold, as the RSSI standard deviation is increased, the possibility of the interference state is decreased and trends to 0.

16. The method according to claim 11, wherein after determining the change relationship between the statistical metrics and the possibilities of the states, the method further includes:
determining a form of a belief function indicative of the change relationship, and performing function fitting on training data points according to the form of the belief function to determine a value of a parameter of the belief function.

17. The method according to claim 16, wherein when the statistical metric is the RTT average value, the belief function of the RTT average value on the fading state is denoted by a function $m^{(F)}(x)=b(x-d)e^{-c(x-d)}$, the belief function of the RTT average value on the interference state is denoted by a function $m^{(I)}(x) = 1 - e^{-a(x-d)}$, and the belief function of the RTT average value on the normal state is denoted by a function $m^{(N)}(x) = 1 - m^{(F)}(x) - m^{(I)}(x)$; where, x denotes the function variable, and a, b, c and d denote parameters of the belief function;

when the statistical metric is the PLR, the belief function of the PLR on the fading state is denoted by a function $m^{(F)}(x) = bxe^{-cx}$, the belief function of the PLR on the interference state is denoted by a function $m^{(I)}(x) = 1 - e^{-ax}$, and the belief function of the PLR on the normal state is denoted by a function $m^{(N)}(x) = 1 - m^{(F)}(x) - m^{(I)}(x)$; where, x denotes a function variable, and a, b and c denote parameters of the belief function; and

when the statistical metric is the RSSI standard deviation, the belief function of the RSSI standard deviation and the fading state is denoted by a function $m^{(F)}(x) = 1 - e^{-ax}$, the belief function of the RSSI standard deviation and the interference state is denoted by a function $m^{(I)}(x) = bxe^{-cx}$, and the belief function of the RSSI standard deviation and the normal state is denoted by a function $m^{(N)}(x) = 1 - m^{(F)}(x) - m^{(I)}(x)$; where, x denotes the function variable, and a, b and c denote parameters of the belief function.

18. The method according to claim 10, wherein the method further includes:

comparing the statistical metrics with a threshold;
determining whether a state is a shielded state according to a comparison result of the comparing; and
when the state is not a shielded state, determining the possibilities of the states of each statistical metric.

101

measurement parameters of a link to be
monitored in the wireless network are collected

102

the collected measurement parameters are
calculated to obtain statistical metrics of each
measurement parameter

103

a possibility of each state refLected by each
statistical metric is determined according to a
predetermined change relationship between
statistical metrics and possibilities of states

104

fusion processing on the possibilities of states
reflected by a plurality of statistical metrics of the
link to be monitored is performed, and a state of
the link to be monitored is determined

# Fig. 1

Fig. 2

**Fig. 3**

Fig. 4

start

501

measurement parameters of a link to be monitored in the wireless network are collected

502

the collected measurement parameters are calculated to obtain statistical metrics of each measurement parameter

503

Statistical metrics are compared with a fifth threshold, and to determine whether a state is a shielded state according to a comparison result

YES

NO

504

possibilities of states reflected by each statistical metric are determined according to a predetermined change relationship between statistical metrics and states

505

Fusion processing is performed on the possibilities of states reflected by a plurality of statistical metrics of the link to be monitored, and a state of the link to be monitored is determined

end

**Fig. 5**

600

state monitoring apparatus for a wireless network

601

collecting unit

602

calculating unit

603

first determining unit

604

second determining unit

Fig. 6

700

state monitoring
apparatus for a
wireless network

701

collecting unit

702

calculating unit

705

third determining
unit

703

first determining
unit

704

second determining
unit

**Fig. 7**

**800**

terminal device, or
network node or
station

**810**

**830**

**840** — input unit

CPU

communication module
(transmitter/receiver)

**820** —

memory

buffer

Application/Function

data

program

display — **850**

Power supply — **860**

# Fig. 8

**900**

Network system

**901**

**902**

terminal device, or
network node or station

Access point

# Fig. 9

1000

Network system

| terminal device, or network node or station | Access point | router, or gateway, or central controller, or cloud |
|---|---|---|

1001               1002               1003

# Fig. 10

| | Europäisches Patentamt |
|---|---|
| | European Patent Office |
| | Office européen des brevets |

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2019 009775 A (FUJITSU LTD) 17 January 2019 (2019-01-17) | 1-3, 9-12,18 | INV. H04W24/04 |
| Y | * paragraphs [0033], [0039], [0040], [0041], [0042]; claims 1, 5 * | 4-7, 13-16 | |
| A | | 8,17 | |
| | ----- | | |
| Y | LEDY JONATHAN ET AL: "Data Fusion for a Forecasting Link State Indicator in VANETs", 2016 IEEE GLOBAL COMMUNICATIONS CONFERENCE (GLOBECOM), IEEE, 4 December 2016 (2016-12-04), pages 1-6, XP033058443, DOI: 10.1109/GLOCOM.2016.7841717 [retrieved on 2017-02-02] | 4-7, 13-16 | |
| A | * page 3 * | 8,17 | |
| | ----- | | |

TECHNICAL FIELDS SEARCHED (IPC)

H04W

The present search report has been drawn up for all claims

| Place of search | Date of completion of the search | Examiner |
|---|---|---|
| Munich | 8 September 2020 | Tessier, Serge |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 751 887 A1

## ANNEX TO THE EUROPEAN SEARCH REPORT
## ON EUROPEAN PATENT APPLICATION NO.

EP 20 17 5407

08-09-2020

| Patent document cited in search report | Publication date | Patent family member(s) | Publication date |
|---|---|---|---|
| JP 2019009775 A | 17-01-2019 | CN 109104739 A<br>JP 2019009775 A | 28-12-2018<br>17-01-2019 |

EPO FORM P0459

For more details about this annex : see Official Journal of the European Patent Office, No. 12/82

**EP 3 751 887 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910499846